# DEMANDE DE BREVET EUROPEEN

(11) **EP 3 045 287 A1**
(43) Date de publication de la demande: **20.07.2016**
(21) Numéro de dépôt: 16151016.9
(22) Date de dépôt: 13.01.2016
(51) Int. Cl.: B29C 35/18, F16J 15/10

(54) **PROCÉDÉ DE FABRICATION D'UN JOINT RENFORCÉ**

(30) Priorité: 19.01.2015 FR 1500108
(71) Demandeur: Torris, Antoine, 80800 Villers Bretonneux (FR)
(72) Inventeur: Torris, Antoine, 80800 Villers Bretonneux (FR)
(74) Mandataire: Schwalek, Valérie

(57) **Abrégé**

La présente invention concerne un procédé de fabrication d'un joint d'étanchéité, selon lequel,
a) on fournit :
- un moule, en matériau non métallique, qui comporte une embase et un couvercle, ladite embase comprenant une cavité et ledit couvercle est apte à fermer au moins partiellement ladite cavité, et
- une composition polymérisable apte à vulcaniser à l'air ambiant pour former un élastomère, ladite composition ne pouvant adhérer sur ledit matériau non métallique dudit moule ;

b) on dépose ladite composition polymérisable sur un renfort de manière à former un assemblage;
c) on implante et on positionne ledit l'assemblage dans ladite cavité dudit moule ;
d) on place ledit couvercle et on laisse vulcaniser ladite composition polymérisable à température ambiante tout en exerçant une force de compression sur ledit couvercle ; et
e) on retire le joint ainsi formé dudit moule.

## Description

### [Domaine technique de l'invention]

La présente invention concerne un procédé de fabrication de joints d'étanchéité renforcés.

### [Art antérieur]

Les aéronefs sont des assemblages de plusieurs éléments structuraux indépendants, de plusieurs éléments mobiles et de plusieurs ouvrants. Afin d'assurer une continuité aérodynamique, une portance de la voilure et une étanchéité cabine, des joints d'étanchéité sont nécessaires. Ces joints d'étanchéité sont des matériaux composites comprenant un élastomère et un renfort (type tissu, tricot, film). La fabrication de ces joints d'étanchéité nécessite l'utilisation de moules métalliques, en particulier en aluminium, usinés qui sont onéreux et longs à fabriquer. L'élastomère est assemblé au renfort par une opération de calandrage. L'assemblage ainsi formé est positionné dans le moule métallique comprenant une embase et un couvercle et d'autres parties mobiles si nécessaire. Le couvercle du moule est mis sur son embase et l'ensemble est positionné sous une presse chauffante. L'élastomère prend la forme souhaitée du moule sous l'effet de l'effort de compression de quelques dizaines de milliers de Newton, ce qui correspond à une pression exercée sur le couvercle du moule allant de 100 N/cm² à 500 N/cm². La vulcanisation de l'élastomère s'effectue en quelques minutes sous l'effet de la température qui est supérieure à 120°C. Une fois l'élastomère vulcanisé, le moule est sorti de la presse. Puis, le couvercle est retiré et le joint peut être démoulé de l'embase de l'outillage.

Les élastomères utilisés pour la fabrication des joints sont des élastomères qui polymérisent (ou vulcanisent) à chaud (c'est-à-dire à une température de plus de 120°C). Afin d'obtenir un joint de la forme voulue et homogène, il est nécessaire d'appliquer une pression importante sur le renfort imprégné de la composition polymérisable qui est disposé dans le moule métallique. Ces niveaux de pression et de température élevés rendent obligatoire l'utilisation d'outillages résistants et donc en métal usiné.

Par ailleurs, il existe des joints non renforcés qui sont formés à partir d'une composition photo polymérisable. Ainsi le document US 2013/0026682 décrit un procédé de fabrication d'un insert, pouvant servir de joint, par dépôt d'une composition photo polymérisable transparente aux U.V. dans un moule lui-même transparent aux U.V. puis polymérisation (réticulation) de la composition de manière à former un élastomère. Cette méthode ne peut pas facilement être utilisée pour un joint renforcé, le renfort n'étant pas nécessairement transparent aux U.V., en particulier, lorsqu'il s'agit d'un textile.

### [Objectifs de l'invention]

Un but de la présente invention est de proposer un nouveau procédé de fabrication de joints renforcés qui permet d'obtenir rapidement et à moindre coût des joints renforcés.

Un but de la présente invention est de proposer un nouveau procédé de fabrication de joints renforcés qui permet d'obtenir rapidement et à moindre coût des joints renforcés qui sont utilisables notamment pour l'étanchéité des ouvrants d'un avion.

Un autre but de la présente invention est de proposer un nouveau procédé de fabrication de joints renforcés qui permet d'obtenir des joints renforcés creux.

### [Résumé de l'invention]

La présente invention concerne un procédé de fabrication d'un joint d'étanchéité, selon lequel, de manière caractéristique,
a) on fournit :
   - un moule, en matériau non métallique, qui comporte une embase et un couvercle, ladite embase comprenant une cavité et ledit couvercle est apte à fermer au moins partiellement ladite cavité, et
   - une composition polymérisable apte à vulcaniser à l'air ambiant pour former un élastomère, ladite composition ne pouvant adhérer sur ledit matériau non métallique dudit moule ;
b) on dépose ladite composition polymérisable sur un renfort de manière à former un assemblage;
c) on implante et on positionne ledit assemblage dans ladite cavité dudit moule;
d) on place ledit couvercle et on laisse vulcaniser ladite composition polymérisable à température ambiante tout en exerçant un effort de compression sur ledit couvercle ; et
e) on retire le joint ainsi formé dudit moule.

Le moule étant non métallique, il peut être rapidement fabriqué et à moindre coût. Il peut s'agir d'un moule en matière plastique, par exemple, dont la nature est adaptée à celle de la composition polymérisable. A titre d'exemple, on peut utiliser un moule en polytétrafluoroéthylène, en polypropylène ou en polyéthylène. Par ailleurs, les moules en matière plastique peuvent présenter des formes plus complexes que les moules métalliques.

La composition polymérisable étant apte à polymériser à l'air ambiant, le procédé ne nécessite par l'utilisation d'U.V. et ne requiert pas l'utilisation d'un four qui peut être coûteux pour des joints de grande dimension.

### [Description détaillée de l'invention]

Le dépôt de la composition polymérisable sur le renfort souple n'est pas limité selon l'invention. Selon un mode de réalisation particulier, on dépose une couche de ladite composition sur au moins une face dudit renfort, notamment, par extrusion et/ou laminage de ladite composition polymérisable sur ledit renfort. Le dépôt peut également être effectué par extrusion de la composition polymérisable, lorsque la viscosité de cette dernière le permet puis étalement de la composition sur le renfort à l'aide d'un racloir, par exemple. Le Demandeur a mis en évidence que le dépôt sur une seule face permet d'obtenir des joints de bonne qualité par le procédé de l'invention. L'épaisseur de la couche n'est pas limitée selon l'invention ; le Demandeur a mis en évidence qu'une couche présentant une épaisseur égale ou supérieure à 0,5 mm ou inférieure ou égale à 5mm et en particulier égale à 1mm ou à 2mm permet d'obtenir des joints de bonne qualité. De préférence, la couche est déposée sur une seule face du renfort, celui-ci étant un tricot ou un tissu.

Selon un mode de réalisation particulier, on exerce une force de compression dont l'intensité est comprise entre 200 N et 4 000 N ce qui correspond à une pression exercée sur le couvercle du moule égale ou supérieure à 1 N/cm² et inférieure ou égale à 4N/cm². Cette valeur fait référence à un moule ayant une cavité de même forme et de même surface qu'un moule utilisé pour le procédé décrit en référence à l'art antérieur. Le Demandeur a en effet également mis en évidence que l'utilisation de la composition polymérisable apte à vulcaniser à l'air ambiant permet d'obtenir un assemblage qui prend la forme de la cavité en exerçant une force de moindre intensité en comparaison à la force qui doit être exercée dans le cas d'un élastomère obtenu par polymérisation à chaud. La force exercée vers le fond de la cavité du moule permet de bien faire prendre à l'assemblage la forme de cette cavité et permet également la bonne répartition de la composition polymérisable sur le renfort ; on obtient ainsi un joint homogène. On peut utiliser une composition polymérisable thixotrope qui va se fluidifier sous la pression et ainsi bien imprégner le renfort, en particulier, lorsqu'il s'agit d'un tissu ou d'un tricot. Les compositions polymérisables comprenant un seul constituant et permettant d'obtenir un élastomère de type silicone, de préférence réticulé, par réaction avec l'humidité de l'air sont parfaitement adaptées et permettent de réduire la force exercée sur le moule.

Le renfort peut être sous forme de feuille souple et en particulier choisi parmi les tissus, tricots et films. La présence d'ouvertures permet une accroche mécanique de la couche d'élastomère finale formée ; l'adhésion entre l'élastomère et le renfort peut également être chimique, la composition polymérisable étant choisie pour adhérer chimiquement par création de liaison covalente avec le renfort ; une adhésion mixte à la fois chimique et mécanique peut également exister sur le joint formé. Le renfort permet la manipulation de l'assemblage malgré la faible viscosité de l'élastomère et procure au joint d'étanchéité les caractéristiques mécaniques répondant aux besoins client. Le renfort peut éventuellement être recouvert d'une couche de traitement pour favoriser l'adhésion physicochimique de l'élastomère. L'assemblage obtenu avec un renfort souple de type tissu ou tricot épouse la forme globale de la cavité du moule et est donc facile à positionner dans cette dernière.

Le matériau du renfort n'est pas limité selon l'invention. Il peut s'agir, de tout matériau sur lequel la composition polymérisable est susceptible d'adhérer chimiquement et/ou mécaniquement indépendamment des forces mises en oeuvre pour cette adhésion. A titre d'exemple, ledit renfort peut être constitué de polyester, verre, carbone ou poly(m-phénylène isophtalamide) ou comprendre de tels matériaux.

Selon un mode de réalisation particulier qui permet d'obtenir des joints creux utilisables pour l'étanchéité des ouvrants notamment, après avoir disposé l'assemblage dans ladite cavité, on dispose une pièce de réserve sur ledit assemblage et on la recouvre dudit assemblage avant de placer ledit couvercle, ladite pièce est en un matériau sur lequel ladite composition polymérisable ne peut adhérer et l'on retire ladite pièce de réserve du joint formé après avoir sorti ledit joint du moule.

En particulier, lorsque la composition polymérisable vulcanise par contact avec l'air ambiant et notamment par réaction chimique avec l'eau contenu dans l'air, ledit moule peut comporter des ouvertures, notamment à ses deux extrémités qui permettent le contact de ladite composition polymérisable avec l'air ambiant. Mais le Demandeur a mis en évidence qu'il est possible d'obtenir une vulcanisation uniforme même lorsque seule l'épaisseur de la couche de composition polymérisable est en contact avec l'air ambiant pendant que le joint est dans le moule, sous pression.

Selon un mode de réalisation qui peut être combiné avec l'un quelconque des modes de réalisation précités, après avoir exercé sur ledit couvercle ladite pression, on retire ledit couvercle et on laisse l'assemblage dans ladite cavité dudit moule en contact avec l'air ambiant.

Le Demandeur a en effet également constaté que même si le moule ne comporte pas d'ouvertures et est fermé à ses extrémités, la durée de contact de la couche de composition polymérisable avec l'air ambiant est suffisante pour engendrer la vulcanisation d'une épaisseur de couche de composition polymérisable, lorsque l'assemblage est disposé dans le moule ; la vulcanisation est complète après avoir sorti le joint du moule et l'avoir laissé au contact de l'air ambiant. Néanmoins, l'épaisseur vulcanisée dans le moule permet de conférer une forme stable et durable au joint qui peut continuer de vulcaniser à l'air. Selon l'invention, il est donc possible de retirer le couvercle après avoir exercé la pression précitée durant un temps suffisant et laisser ensuite l'assemblage dans la cavité du moule ; la surface de la composition polymérisable en contact avec l'air est alors grandement augmentée ce qui permet à la composition de polymériser éventuellement à travers le tissu/tricot qui laisse passer l'air. On démoule ensuite le joint pour laisser la polymérisation s'achever.

Avantageusement, la composition polymérisable présente une viscosité comprise entre 10 000 et 100 000 mPa.s. De telles compositions peuvent être déposées sans effort sur le renfort, par extrusion ou laminage et ne coulent pas. On peut alors utiliser un renfort de type tissu ou tricot qui comporte des ouvertures. La viscosité de ces compositions polymérisables est inférieure à celle des élastomères utilisés dans le procédé de l'art antérieur. Par ailleurs, la viscosité peut être mesurée par extrusion. On obtient alors une vitesse d'extrusion en g/min mesurée selon les conditions citées en référence aux exemples. Dans le cas de la présente invention, la composition polymérisable présente une vitesse d'extrusion égale ou supérieure à 50g/min et égale ou inférieure à 400 g/min et de préférence supérieure à 75g/min.

La composition polymérisable est choisie de préférence parmi les compositions comprenant un composé polymérisable de type siloxane ou un composé polymérisable de type uréthane. De telles compositions permettent de former en vulcanisant à l'air ambiant des élastomères.

Ainsi, la présente invention englobe les compositions qui comportent deux constituants qui vulcanisent ou réticulent l'un avec l'autre à l'air ambiant lorsqu'ils sont en mélange, les compositions comprenant deux constituants en mélange et un catalyseur, les compositions comprenant un constituant et un catalyseur et les compositions comprenant uniquement un seul constituant et pas de catalyseur. Il peut s'agir, par exemple, d'une composition qui comprend un premier composé du type vinyl, un deuxième composé du type hydrure et un catalyseur à base de platine ou d'une composition qui comprend un premier composé du type polymère silanol et un deuxième composé du type polymère comprenant des fonctions alkoxy.

Selon un mode de réalisation préféré, ladite composition polymérisable est constituée d'un composé de type siloxane comprenant au moins deux groupements réactifs aptes à polymériser selon une réaction de polycondensation à température ambiante au contact de l'eau contenue dans l'air ambiant. Ces compositions sont bien connues de l'Homme du Métier ; elles produisent en vulcanisant des silicones qui sont des élastomères. Le composé de type siloxane comprend de préférence quatre groupements réactifs terminaux (deux à chaque extrémité) permettant d'obtenir un élastomère réticulé. Il est également possible d'obtenir un élastomère réticulé du fait de groupements réactifs situé le long de la chaîne des atomes de silicium du composé de type siloxane.

Ainsi le composé polymérisable de type siloxane comprend au moins deux groupements réactifs choisis parmi les atomes d'halogène, notamment CI, les groupements hydroxyle, alkoxy, amine, notamment diméthyle amine, acétoxy et oxime. Le composé polymérisable comprend au moins deux groupements réactifs terminaux, de préférence quatre (2 à chaque extrémité) afin de former un polymère réticulé. De préférence, ces groupements réactifs sont des groupements acétoxy. Il peut également comprendre des groupements réactifs le long de la chaîne formée des atomes Si.

Ledit élastomère peut être choisi parmi les poly (diméthyle siloxanes) et les poly (di éthyl siloxanes) et en particulier parmi les poly (diméthyle siloxanes) réticulés et les poly (di éthyl siloxanes) réticulés.

Selon un mode de réalisation particulier, ledit élastomère formé présente une dureté Shore A égale ou supérieure à 25, de préférence sensiblement égale ou supérieure à 45.

Selon un autre mode de réalisation qui peut être combiné avec celui précité, ledit élastomère formé présente une résistance à la rupture supérieure ou égale à 2 MPa. De préférence, la résistance à la rupture de l'élastomère est égale ou inférieure à 9 MPa.

Selon un troisième mode de réalisation qui peut être combiné avec l'un ou l'autre ou les deux modes de réalisation précités, ledit élastomère formé présente un allongement à la rupture égal ou supérieur à 300%.

Le procédé selon l'invention peut être applicable à tous les joints d'étanchéité renforcés pour les secteurs aéronautique, nucléaire, ferroviaire, naval, militaire, spatial. Les joints d'étanchéité peuvent être de formes très variées : joint à lèvre, joint à bulle, soufflets.

### Définitions ;

On définit, selon la présente invention par les termes « air ambiant » de l'air à une température comprise entre 0°C et 35°C, de préférence égale à 25°C et une hygrométrie comprise entre 65% et 95%.

Le terme « vulcanisation » désigne toute réaction de polymérisation, en particulier par addition ou par polycondensation. Plus particulièrement, au sens de la présente invention, le terme vulcanisation désigne la formation de polymères linéaires par polymérisation et la formation de polymères réticulés.

Les termes « apte à vulcaniser à l'air ambiant » désigne une composition apte à polymériser sans apport d'énergie sous forme d'U.V. et/ou de chaleur. Le type de polymérisation n'est pas limité, il peut s'agir d'une polyaddition, d'une polycondensation ou d'une polymérisation radicalaire. En particulier, ce terme peut désigner une polymérisation donnant lieu à un polymère réticulé.

Le terme « siloxane » désigne tout composé comprenant au moins un motif de formule brute [SiOR1R2]ₙ dans laquelle n est un entier supérieur ou égal à 1. R1 et R2 pouvant être identiques ou non et choisis parmi les groupements alkyles, en particulier éthyle et méthyle. Il peut s'agir d'un homopolymère, d'un copolymère ou d'un copolymère à blocs. L'Homme du Métier est apte à choisir n en fonction de la viscosité désirée pour la composition polymérisable et en fonction des caractéristiques mécaniques (dureté, résistance à la rupture et élongation à la rupture) souhaitées pour l'élastomère final.

Le terme « alkoxy » désigne tout groupement réactif de formule R-0- dans laquelle R est un alkyle pouvant comprendre de 1 à 5 carbones.

Le terme « polymériser » désigne tout type de polymérisation.

### [Exemples]

### Exemple 1 :

On dépose une composition polymérisable comprenant un seul constituant apte à polymériser par réaction avec l'eau contenu dans l'air ambiant. Cette composition est formée d'un polymère de siloxane comprenant des groupements réactifs notamment terminaux qui sont des groupes CH3-C(=O)-O-. L'élastomère obtenu par vulcanisation est réticulé. La viscosité de cette composition correspond à une vitesse d'extrusion de 350g/min mesurée à température ambiante (25°C) avec une ouverture de 3,2 mm à 0,62 MPa. La composition est déposée par extrusion sur le renfort qui est un tricot de fils de polyester puis raclée pour former une couche de 1 mm d'épaisseur. On place l'assemblage formé dans la cavité d'un moule en plastique sur lequel la composition ne peut pas adhérer et l'on ferme le moule avec le couvercle. On exerce une pression de 300 N ce qui correspond à une pression de 3 N/cm². On laisse la composition polymériser pendant 12 heures. L'élastomère formé par la composition polymérisable précitée présente une dureté shore A de 25 mesurée selon la norme ASTM D2240, une densité de 1,04g/cm³ mesurée selon la norme ASTM D1475, une résistance à la rupture de 2,3MPa mesurée selon la norme ASTM D412, et une élongation à la rupture de 540% mesurée selon la norme ASTM D 412. Cet élastomère résiste à des températures comprises entre -60°C et 180°C.

### Exemple 2

On dépose une composition polymérisable comprenant un seul constituant apte à polymériser par réaction avec l'eau contenu dans l'air ambiant. Cette composition est formée d'un polymère de diméthylsiloxane comprenant des groupements réactifs notamment terminaux tels que cités dans la présente demande. Le composé de type siloxane polymérisable comporte 4 groupements réactifs terminaux qui permettent d'obtenir un élastomère réticulé. La viscosité de cette composition correspond à un taux d'extrusion de 78,6 g/min mesuré à 25°C avec une ouverture de 3,2 mm à 0,62 MPa. La composition est déposée par extrusion sur le renfort qui est un tricot de fil de polyester puis raclée pour former une couche de 1 mm d'épaisseur. On place l'assemblage formé dans la cavité d'un moule en matière plastique sur laquelle la composition polymérisable ne peut adhérer et l'on ferme le moule avec le couvercle. On exerce une pression de 300 N ce qui correspond à une pression de 3 N/cm². On laisse la composition polymériser pendant 12 heures. L'élastomère formé par la composition polymérisable précitée présente une dureté shore A de 45,6 mesurée selon la norme ASTM D2240, une densité de 1,10g/cm3 mesurée selon la norme ASTM D1475, une résistance à la rupture de 6 Mpa mesurée selon la norme ASTM D 412 et une élongation à la rupture de 626 % mesurée selon la norme ASTDM D 412. Cet élastomère résiste également à des températures comprises entre -60°C et 180°C.

## Revendications

1. Procédé de fabrication d'un joint d'étanchéité, **caractérisé en ce que** :
a) on fournit :
- un moule, en matériau non métallique, qui comporte une embase et un couvercle, ladite embase comprenant une cavité et ledit couvercle est apte à fermer au moins partiellement ladite cavité, et
- une composition polymérisable apte à vulcaniser à l'air ambiant pour former un élastomère, ladite composition ne pouvant adhérer sur ledit matériau non métallique dudit moule ;
b) on dépose ladite composition polymérisable sur un renfort de manière à former un assemblage;
c) on implante et on positionne ledit l'assemblage dans ladite cavité dudit moule ;
d) on place ledit couvercle et on laisse vulcaniser ladite composition polymérisable à température ambiante tout en exerçant une force de compression sur ledit couvercle ; et
e) on retire le joint ainsi formé dudit moule.

2. Procédé selon la revendication 1 **caractérisé en ce que** l'on dépose une couche de ladite composition polymérisable sur au moins une face dudit renfort, en particulier, par extrusion et/ou laminage de ladite composition polymérisable sur ledit renfort.

3. Procédé selon l'une quelconque des revendications précédentes, **caractérisé en ce que** l'on exerce une pression sur le couvercle du moule égale ou supérieure à 1 N/cm² et inférieure ou égale à 4N/cm².

4. Procédé selon l'une quelconque des revendications 1 à 3, **caractérisé en ce que** le renfort est une feuille souple et notamment choisi parmi un tissu, un tricot et un film.

5. Procédé selon l'une quelconque des revendications précédentes, **caractérisé en ce que** ledit renfort est constitué de polyester, verre, carbone ou poly(m-phénylène isophtalamide).

6. Procédé selon l'un quelconque des revendications précédentes, **caractérisé en ce que** après avoir disposé l'assemblage dans ladite cavité, on dispose une pièce de réserve sur ledit assemblage et on la recouvre dudit assemblage avant de placer ledit couvercle, **en ce que** ladite pièce est en un matériau sur lequel ladite composition polymérisable ne peut adhérer et **en ce que** l'on retire ladite pièce de réserve du joint formé après avoir sorti ledit joint du moule.

7. Procédé selon l'une quelconque des revendications précédentes, **caractérisé en ce que**, après avoir exercé sur ledit couvercle ladite pression, on retire ledit couvercle et on laisse l'assemblage dans ladite cavité dudit moule en contact avec l'air ambiant.

8. Procédé selon l'une quelconque des revendications précédentes, **caractérisé, en ce que** ladite composition polymérisable présente une viscosité comprise entre 10 000 et 100 000 mPa.s.

9. Procédé selon l'une quelconque des revendications précédentes, **caractérisé en ce que** ladite composition polymérisable est choisie parmi les compositions comprenant un composé polymérisable de type siloxane ou un composé polymérisable de type uréthane.

10. Procédé selon la revendication 9, **caractérisé en ce que** ladite composition polymérisable est constituée d'un composé de type siloxane comprenant au moins deux groupements réactifs aptes à polymériser selon une réaction de polycondensation à température ambiante au contact de l'eau contenue dans l'air ambiant.

11. Procédé selon la revendication 10, **caractérisé en ce que** ledit composé polymérisable de type siloxane comprend ou moins deux groupements réactifs choisis parmi les atomes d'halogène, notamment CI, les groupements hydroxyle, alkoxy, amine, notamment diméthyle amine, acétoxy et oxime.

12. Procédé selon l'une quelconque des revendications précédentes, **caractérisé en ce que** ledit élastomère est choisi parmi les poly(diméthyle siloxanes) et les poly(diéthyl siloxanes).

13. Procédé selon l'une quelconque des revendications précédentes, **caractérisé en ce que** ledit élastomère formé présente une dureté Shore A égale ou supérieure à 25

14. Procédé selon l'une quelconque des revendications précédentes, **caractérisé en ce que** ledit élastomère formé présente une résistance à la rupture déchirement supérieure ou égale à 2MPa.

15. Procédé selon l'une quelconque des revendications précédentes, **caractérisé en ce que** ledit élastomère formé présente un allongement à la rupture égal ou supérieur à 300%.
